# EUROPÄISCHE PATENTSCHRIFT

(11) **EP 0 794 439 B1**
(45) Veröffentlichungstag und Bekanntmachung des Hinweises auf die Patenterteilung: **08.10.2003**
(21) Anmeldenummer: 97103452.5
(22) Anmeldetag: 03.03.1997
(51) Int. Cl.: G01S 15/88, G01S 13/88, B23B 49/00

(54) **Verfahren und Vorrichtung zum Markieren von Durchgangsbohrungen**
Method and device for marking holes
Méthode et dispositif de marquage de trous

(30) Priorität: 08.03.1996 DE 19609157; 03.08.1996 DE 19631471
(43) Veröffentlichungstag der Anmeldung: 10.09.1997
(73) Patentinhaber: Sternal, Bernd, 06507 Gernrode (DE); Blank, Jürgen, 06507 Gernrode/Harz (DE)
(72) Erfinder: Sternal, Bernd, 06507 Gernrode (DE); Blank, Jürgen, 06507 Gernrode/Harz (DE)
(74) Vertreter: Kagelmann, Manfred, Dipl.-Ing.

(56) Entgegenhaltungen:
- EP-A- 0 326 412
- WO-A-88/06298
- WO-A-94/27168
- DE-A- 4 406 681
- GB-A- 2 154 319
- US-A- 5 434 500
- PATENT ABSTRACTS OF JAPAN vol. 017, no. 563 (P-1628), 12. Oktober 1993 (1993-10-12) & JP 05 164539 A (PUROITO:KK), 29. Juni 1993 (1993-06-29)
- PATENT ABSTRACTS OF JAPAN vol. 011, no. 001 (M-550), 6. Januar 1987 (1987-01-06) & JP 61 182711 A (SUMIO MATSUSHIMA), 15. August 1986 (1986-08-15)

## Beschreibung

Die Erfindung betrifft ein Verfahren und eine Vorrichtung zum Markieren von Durchgangsbohrungen und Durchbrüchen in Wänden und Decken von Gebäuden und Räumen mittels elektromagnetischer Wellen, mit an einer Wand- oder Deckenseite befindlichem Sendegerät und an der anderen Wand- oder Deckenseite befindlichem Empfangsgerät, wobei das Sendegerät einerseits der Wandung ein Transponder ist, welcher von einem andererseits der Wandung befindlichem, mit dem Empfangsgerät kombiniertem Sender aktiviert wird.

Sie wird angewandt bei der Markierung von Durchgangsbohrungen, wenn es darauf ankommt, den Verlauf und die Richtung einer Durchgangsbohrung oder die Stelle eines Wand- oder Deckendurchbruches vorher beidseitig der Wand- oder der Decke genau zu bestimmen und zumarkieren.

Bekannt ist eine Vorrichtung bestehend aus Sender und Empfänger zur Herstellung von genau fluchtenden Markierungen diesseits und jenseits einer Wandung mittels elektromagnetischer Wellen, wobei durch ein Aufeinanderzubewegen von Sender und Empfänger die Markierung ermittelt wird.

Nachteilig daran ist jedoch, dass das reaktive Suchfeld selbst sehr eng bemessen ist und es deshalb einigen Suchaufwandes bedarf um erst einmal in das Suchfeld zugelangen, das heißt mit der Empfangantenne in den Sendebereich des nicht sichtbaren Senders rückseitig der Wandung zugelangen.
Sobald das Suchfeld aufgefunden ist, wird das Potential desselben mittels eines einfachen Anzeigegerätes, wie einem Voltmeter, angezeigt. Die weitere Suche erfolgt dann aber, mangels der Anzeige eines Suchpfades, wiederum weitestgehend unsystematisch, nämlich nur nach der Stärke des gerade auftreffenden Signals. Die Arbeit mit solch einer Vorrichtung ist uneffektiv ( WO 88/06298).

Bekannt ist weiterhin eine Vorrichtung zur Ortung eines Abzweiges in einer unterirdisch verlegten Rohrleitung, welche durch eine Rohr-in-Rohr Verlegung saniert werden soll.
Dazu wird zunächst in den Stutzen der Abzweigung ein Resonator eingesetzt, das neue Rohr in das alte Rohr eingebracht, der Hohlraum zwischen altem und neuem Rohr mit Dichtmasse ausgefüllt und der Standort des Resonators mittels einer im Rohr verfahrbaren Ortungs- und/oder Bohrvorrichtung ermittelt und mit der Bohrung zerstört. Das Suchfeld ist dabei linear in einer Suchebene und radial zur Rohrleitung definiert. Die Ortung selbst erfolgt mittels eines festen Resonators, welcher nach der Ortung mit der Bohrung zerstört wird und verloren ist. Diese Vorrichtung ist nicht zur zerstörungsfreien Markierung von Durchgangsbohrungen geeignet (EP 0 326 412).

Bekannt ist auch ein Positionsindikator zur Ortung von Positionen hinter einer Wand mittels eines Magnetfeldgenerators und Detektors, wobei der Magnetfeldgenerator ein als Sender ausgebildetes Netzgerät mit Spule und Netzstecker ist, welcher mit der standardmäßigen Netzfrequenz aussendet. Der Detektor als Empfänger weist in einem quadratischen Gehäuse vier gleichmäßig von einander beabstandete Spulen mit Leuchtmittel als Display auf. In Funktion dieser Vorrichtung werden bei Anordnung und Inbetriebnahme des Senders einerseits der Wand und Anordnung des Empfängers andererseits der Wand, die durch die Wand dringenden Feldstärken des Senders empfangen und von den jeder Empfangsspule zugeordnetem Leuchtmittel angezeigt.

Sobald alle Leuchtmittel gleichmäßig hell Leuchten befinden sich die Positionen von Sender und Empfänger in Übereinstimmung.
Nachteilig ist daran, dass es zunächst einer aufwendigen Suche nach dem relativ engen Suchfeld ohne Leuchtanzeige bedarf, die weitere Suche nach der Position des Senders nicht zielgerichtet geführt ist, sondern undefiniert erfolgt und dass die Beurteilung der Leuchtkraft der Anzeigen sehr subjektiv und relativ ungenau ist ( US 5,434,500).

Aufgabe der Erfindung ist es, ein Verfahren zur schnellen und zuverlässigen beidseitigen Markierung von Durchgangsbohrungen an Wänden und Decken von Gebäuden und Räumen mittels elektromagnetischer Wellen und eines Transponders sowie eine leicht handhabbare Vorrichtung zur Durchführung des Verfahrens zu schaffen.

Erfindungsgemäß wird die Aufgabe wie mit den Ansprüchen angegeben gelöst.

Zur Markierung einer Durchgangsbohrung an einer Wandoder Deckenseite wird ein Elektromagnetwellensendegerät oder die Antenne eines solchen und an der anderen Seite der Wand oder der Decke ein Elektromagnetwellenempfangsgerät oder die Antenne eines solchen lose beweglich installiert werden oder daran gehalten werden; oder auf einer Wand- oder Deckenseite ein kombiniertes Elektromagnetwellensende- und -empfangsgerät oder die Antennen eines solchen und an der anderen Seite der Wand, wobei das Sendegerät einerseits der Wandung ein Transponder ist, welcher von einem andererseits der Wandung befindlichem, mit dem Empfangsgerät kombiniertem Sender aktiviert wird und das Empfangsgerät mittels einer Empfangsantenne und einer Referenzantenne, als zwei kreuzweise angeordnete Richtantennen ausgebildet, die Transpondersignale empfängt, die mittels eines mit dem Empfangsgerät zusammen geschalteten Rechners und geeigneter Software so aufbereitet werden , dass die Koordinaten der Markierung in einem Display oder anderen Anzeigegeräten sichtbar sind und durch Aufeinanderzubewegen von Sende- und Empfangsantenne und Verdrehung derselben um ihre Fluchtlinie in Übereinstimmung gebracht werden und damit auf der einen und auf der anderen Wand- oder Deckenseite die Markierung bestimmen.

Die Vorrichtung zur Durchführung des Verfahrens besteht aus einem separaten Elektromagnetwellenempfangsgerät oder aus einem separaten Elektromagnetwellensendegerät kombiniert mit einem Elektromagnetwellenempfangsgerät und einem separaten Transponder einschließlich Antenne. Elektromagnetwellenempfangsgerät und Sendegerät oder das kombinierte Sende- und Empfangsgerät und Transponder sind in ihrer Charakteristik aufeinander abgestimmt. Das Elektromagnetwellenempfangsgerät ist mit zwei kreuzweise zueinander gestalteten Richtantennen kompakt gestaltet und am Gehäuse einer elektrischen Handbohrmaschine parallel zur Bohrerachse verschiebbar zu befestigen oder im Gehäuse einer solchen integriert. Das kombinierte Elektromagnetwellensende- und empfangsgerät ist dabei zusätzlich mit einer Referenzantenne für den Transponder auf der anderen Wandseite ausgestattet. Das Elektromagnetwellenempfangsgerät und das kombinierte Elektromagnetwellensende- und -empfangsgerät sind mit einem im kompakten Gehäuse befindlichen Rechner so zusammen geschaltet, dass unter Verwendung geeigneter Software die vom Transponder in Form von Koordinaten, digitaler oder analoger Anzeige in einem an der Bohrmaschine befindlichen oder einem im Bohrmaschinengehäuse integrierten Display oder an Zeigerinstrumenten sichtbar sind und/oder in einem Datenspeicher speicherbar und an externe Einrichtungen übertragbar sind.

Das Gehäuse für Transponder oder Sendegerät mit Zeiger und Markierungsloch sowie das Anzeigegerät an der Handbohrmaschine sind mit einer Lotrechtmarkierung oder einer Winkelgradmarkierung in Fluchtlinie von Sender oder Transponder und Empfänger ausgestattet.

Die Erfindung ermöglicht es, eine Durchgangsbohrung an Wänden und Decken von Gebäuden sehr rationell beidseitig zu markieren.

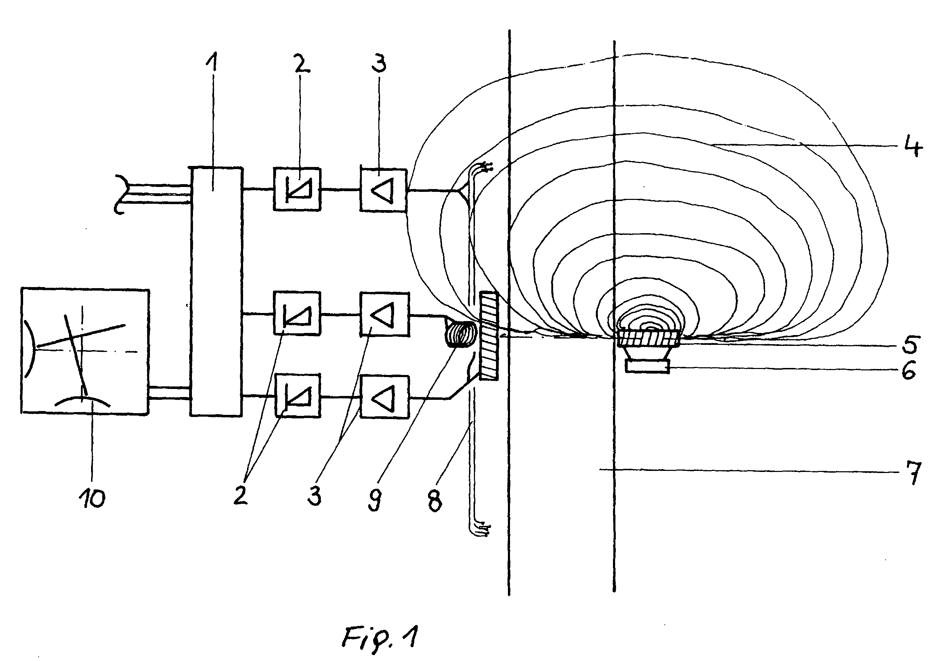

Nachstehens wird die Erfindung an einem Ausführungsbeispiel erläutert.
In der zugehörigen Zeichnung ist mit
- Fig. 1: die Anordnung der erfindungsgemäßen Vorrichtung an einer Wand und die Schaltung von Elektromagnetwellensende- und empfangsgerät, Sensorantenne, Referenzantenne, Rechner, Anzeigegeräte, sowie die Anordnung eines Transponders in Kombination damit und mit

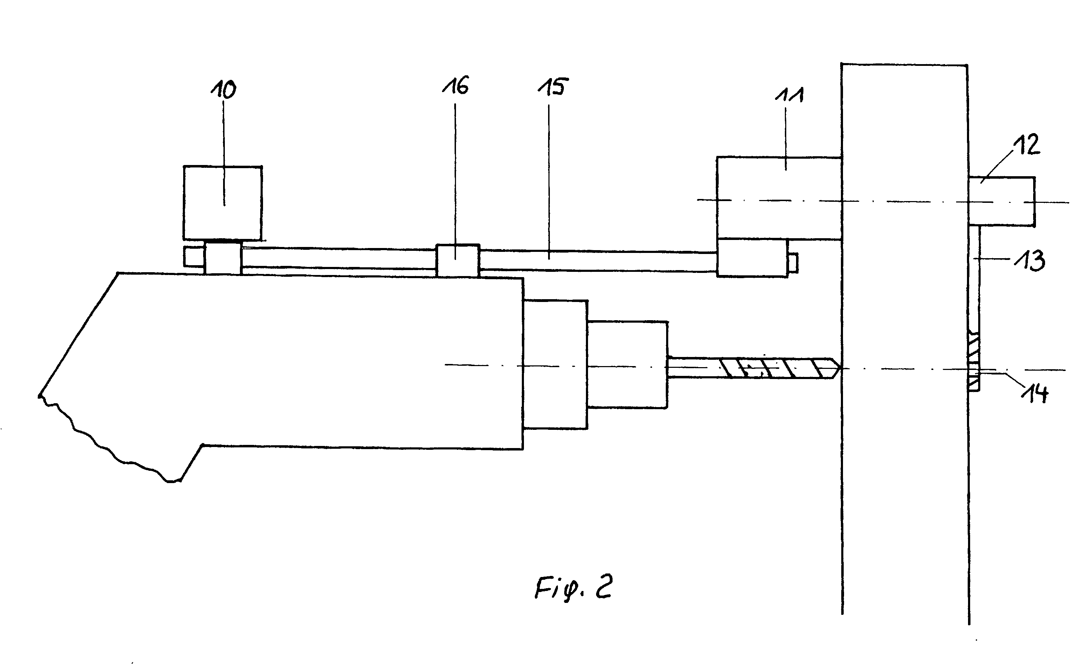

- Fig. 2: die Vorrichtung an einer Bohrmaschine Schematisch dargestellt.

Am Gehäuse einer elektrischen Handbohrmaschine befindet sich ein miniaturisiertes Elektromagnetwellensende- und empfangsgerät einschließlich Verstärker 3, Empfangsantenne 9, Referenzantenne 8, Rechner 1 sowie Anzeigegerät 10 im Gehäuse 11. Das Gehäuse 11 ist mittels Stange 15 in der Führung 16, 17 verschiebbar. In einem anderen separatem Gehäuse 12 befindet sich der Transponder 6 mit der Ferritantenne 5. Dieser ist in seiner Frequenz und seiner Empfindlichkeit auf das am Bohrmaschinengehäuse befindliche Elektromagnetwellensende- und empfangsgerät abgestimmt. Das Gehäuse 12 weist einen Ausleger 13 mit Markierungsloch 14 auf.

Zur Ausführung einer Durchgangsbohrung durch die Wand 7 und zur Markierung derselben auf einer Seite der Wand 7 wird die Austrittsstelle der beabsichtigten Durchgangsbohrung durch Ansetzen, Anheften, Ankleben oder Anhalten des Transponders 6 markiert und auf der anderen Seite der Wand mit der erfindungsgemäß ausgestatteten Bohrmaschine geortet, indem die Bohrmaschine an der Wandoberfläche entlang geführt wird, bis das Antwortsignal des Transponders 6 im Anzeigegerät 10 erscheint. Mittels eines Fadenkreuzes im Display oder mittels digitaler Anzeige erfolgt sodann eine Feinausrichtung der elektrischen Handbohrmaschine auf einer Wandseite in Richtung auf den Transponder 6 an der anderen Wandseite. Der Ausleger 13 am Gehäuse 12 des Transponders 6 und auch das Anzeigegerät 13 sind mit je einer Lotrechtmarkierung versehen, die es ermöglichen, Bohreransatz und Markierungsloch 14 in Übereinstimmung zu bringen.

## Patentansprüche

1. Verfahren zum Markieren von Durchgangsbohrungen und Durchbrüchen in Wänden(7) und Decken von Gebäuden und Räumen mittels elektromagnetischer Wellen, mit an einer Wand - oder Deckenseite befindlichem Sendegerät mit Sendeantenne(5) und an der anderen Wand- oder Deckenseite befindlichem Empfangsgerät mit Empfangsantenne(9), **dadurch gekennzeichnet, dass**
- das Sendegerät einerseits der Wandung ein Transponder ist, welcher von einem andererseits der Wandung befindlichen, mit dem Empfangsgerät kombiniertem Sender aktiviert wird
- das Empfangsgerät mittels der Empfangsantenne(9) und einer Referenzantenne (8) die Transpondersignale empfängt, die mittels eines mit dem Empfangsgerät zusammen geschalteten Rechners(1) und geeigneter Software so aufbereitet werden, dass die Koordinaten der Markierung in einem Display oder anderen Anzeigegeräten(10) sichtbar sind und durch Aufeinanderzubewegen von Sende- und Empfangsantenne (9) und Verdrehung derselben um ihre Fluchtlinie in Übereinstimmung gebracht werden und damit auf der einen und auf der anderen Wand- oder Deckenseite die Markierung bestimmen.

2. Vorrichtung zum Markieren von Durchgangsbohrungen und Durchbrüchen in Wänden(7) und Decken von Gebäuden und Räumen mittels elektromagnetischer Wellen, bestehend aus einem an einer Wand- oder Deckenseite befindlichen Sendegerät mit Sendeantenne(5) und einem an der anderen Wand- oder Deckenseite befindlichen Empfangsgerät mit Empfangsantenne(9), **dadurch gekennzeichnet, dass**
- das Sendegerät einerseits der Wandung ein Transponder (6) ist, welcher von einem andererseits der Wandung befindlichen, mit dem Empfangsgerät kombinierten Sender aktiviert wird,
- das Empfangsgerät die Empfangsantenne(9) und eine Referenzantenne (8) aufweist, um die Transpondersignale zu empfangen, sowie einen Rechner(1) mit geeigneter Software, um die Transpondersignale aufzubereiten, ein Display oder ein anderes Anzeigegerät(10), um die Koordinaten der Markierung sichtbar zu machen,
und/oder einen internen oder externen Datenspeicher, um die Koordinaten der Markierung zu speichern oder zu einer externen Einrichtung zu übertragen.

3. Vorrichtung nach Anspruch 2, **dadurch gekennzeichnet, dass** die Empfangsantenne(9) des kombinierten Empfangsund Sendegerätes eine Sensorantenne, bestehend aus zwei kreuzweise zueinander angeordneten Ferritantennenspulen ist.

4. Vorrichtung nach den Ansprüchen 2 und 3 **dadurch gekennzeichnet, dass** das kombinierte Empfangs- und Sendegerät, einschließlich Rechner (1), Anzeigegerät(10), Datenspeicher, Referenzantenne (8) und Empfangsantenne (9) in einem kompakten Gehäuse befindlich sind, welches passgerecht an einer elektrischen Handbohrmaschine anbringbar ist.

5. Vorrichtung nach den Ansprüchen 2 bis 4, **dadurch gekennzeichnet, dass** das kombinierte Sende- und Empfangsgerät einschließlich Rechner (1), Anzeigegerät(10), Datenspeicher, Referenzantenne (8) und Empfangsantenne(9) im Gehäuse einer elektrischen Handbohrmaschine integriert sind.

6. Vorrichtung nach den Ansprüchen 2 bis 5, **dadurch gekennzeichnet, dass** das Anzeigegerät (10) ein Display mit Fadenkreuz oder ein digitales Anzeigegerät oder ein Zeigerinstrument ist.

7. Vorrichtung nach den Ansprüchen 2 bis 6 **dadurch gekennzeichnet, dass** das Anzeigegerät(10) oder die Handbohrmaschine und das Gehäuse für das kombinierte Send- und Empfangsgerät mit einer Lotrechteinstellung versehen sind.

## Claims

1. A method for marking of through holes and openings in walls (7) and ceilings of buildings and rooms by means of electromagnetic waves, using a transmitter with sending aerial (5) provided on the one wall or ceiling side, and a receiver with receiving aerial (9) provided on the other wall or ceiling side, **characterized by** the fact that
- the transmitting unit on the one side of the wall is a transponder which gets activated by a transmitter combined with the receiving unit and placed on the other side of wall;
- the receiving unit receives the transponder signals by means of the receiving aerial (9) and a reference aerial (8), where the transponder signals are prepared in a computer (1) interlinked with the receiving unit and working with suitable software such that the coordinates of the marking become visible in a display or other indicating units (10), and where, by approaching the sending and the receiving aerial (9) and twisting the latter around their axes of alignment, the antennas are brought to conformance so that the marking can be determined on the other wall or ceiling side.

2. An appliance for marking of through boles and openings in walls (7) and ceilings of buildings and rooms by means of electromagnetic waves, consisting of a transmitter with sending aerial (5) provided on the one wall or ceiling side, and a receiver with receiving aerial (9) provided on the other wall or ceiling side, **characterized by** the fact that
- the transmitting unit on the one side of wall is a transponder (6) which gets activated by a transmitter combined with the receiving unit and located on the other side of the wall;
- the receiving unit has the receiving aerial (9) and a reference aerial (8) in order to receive the transponder signals, plus a computer (1) with suitable software for processing the transponder signals, a display or another indicating unit (10) to make visible the coordinates of the marking, and/or an internal or external data memory for storage of the coordinates of the marking or for transmitting them to an external unit.

3. An appliance according to the claim 2, **characterized by** the fact that that the receiving aerial (9) of the combined transmitter-receiver unit is a sensor aerial consisting of two ferrite aerial coils in crosswise arrangement.

4. An appliance according to the claims 2 and 3, **characterized by** the fact that the combined transmitter-receiver unit including computer (1), indicator unit (10), data memory, reference aerial (8) and receiving aerial (9) are located in a compact casing which may be fitted to a portable electric drill.

5. An appliance according to the claims 2 through 4, **characterized by** the fact that the combined transmitter-receiver unit including computer (1), indicator unit (10), data memory, reference aerial (8) and receiving aerial (9) form integral parts of a portable electric drill.

6. An appliance according to the claims 2 through 5, **characterized by** the fact that the indicator unit (10) is a display with cross-lines or a digital indicator unit or a scale-and-pointer instrument.

7. An appliance according to the claims 2 through 6, **characterized by** the fact that the indicator unit (10) or the portable electric drill and the casing for the combined transmitter-receiver unit are provided with a mechanism for perpendicular alignment.

## Revendications

1. Méthode pour mettre des points de repère pour trous de perçage ou orifices dans des murs ou parois (7), dans des plafonds de bâtiments et dans des locaux moyennant d'ondés électromagnétiques, avec un appareil-émetteur se trouvant sur un côté du mur ou du plafond, comprenant une antenne d'émission (5), et avec un appareil-récepteur se trouvant sur l'autre côté du mur ou du plafond, comprenant une antenne de réception, caractérisée de manière que
- l'appareil-émetteur sur l'un des deux côtés du mur présente un transpondeur qui est activé par un émetteur lequel est combiné avec l'appareil-récepteur se trouvant sur l'autre côté du mur
- l'appareil-récepteur reçoit les signaux du transpondeur moyennant une antenne de réception (9) et une antenne de référence (8), et les signaux seront traités moyennant un ordinateur (1) couplé à l'appareil-récepteur et un logiciel approprié d'une telle manière que les coordonnées du point de repère seront visiblement affichées sur un écran ou sur d'autres dispositifs de visualisation (10), et par le changement de position des antennes d'émission et de réception (9) en direction l'une vers l'autre et par un mouvement rotatoire autour leur ligne de fuite les coordonnées seront mises en convergence, et ainsi sur l'un côté et sur le côté opposé du mur ou du plafond sera déterminé le point de repère.

2. Dispositif pour le repérage de points d'alésages et de percées dans des murs et parois (7) et des plafonds de bâtiments et de locaux moyennant d'ondes électromagnétiques, avec un appareil-émetteur se trouvant sur un côté du mur ou du plafond, comprenant une antenne d'émission (5), et avec un appareil-récepteur se trouvant sur l'autre côté du mur ou du plafond, comprenant une antenne de réception (9), caractérisé de manière que
- l'appareil-émetteur sur, l'un des côtés du mur présente un transpondeur (6) qui est activé par un émetteur lequel est combiné avec l'appareil-récepteur se trouvant sur l'autre côté du mur
- l'appareil-récepteur est muni d'une antenne de réception (9) et d'une antenne de référence (8) pour recevoir les signaux du transpondeur, ainsi que d'un ordinateur avec un logiciel approprié pour traiter les signaux du transpondeur, d'un écran ou d'un autre dispositif de visualisation (10) pour faire visibles les coordonnées du repérage, et/ou d'une mémoire d'informations interne ou externe pour les fins de mémoriser les coordonnées du repérage ou de les transmettre à un appareillage extérieur.

3. Dispositif selon la revendication 2, caractérisé de manière que l'antenne de réception (9) de l'appareil combiné de réception et d'émission présente une antenne-capteur composée de deux cadres-bobines en ferrite en forme de croix.

4. Dispositif selon les revendications 2 et 3, caractérisé de manière que l'appareil combiné de réception et d'émission, y compris l'ordinateur (1), le dispositif d'affichage (10), la mémoire d'informations, l'antenne de référence (8) et l'antenne de réception (9) se trouvent dans un boîtier compact qui peut être ajusté, et fixé précisément à une drille à main électrique.

5. Dispositif selon les revendications 2 à 4, caractérisé de manière que l'appareil combiné de réception et d'émission, y compris l'ordinateur (1), le dispositif d'affichage (10), la mémoire d'informations, l'antenne de référence (8) et l'antenne de réception (9) se trouvent intégrés dans l'intérieur du boîtier d'une drille à main électrique.

6. Dispositif selon les revendications 2 à 5, caractérisé de manière que le dispositif d'affichage (10) présente un écran de visualisation avec un réticule, ou un dispositif d'affichage numérique, ou un instrument à aiguille.

7. Dispositif selon les revendications 2 à 6, caractérisé de manière que le dispositif d'affichage (10) ou la drille à main et le boîtier pour l'appareil combiné d'émission et de réception sont munis d'un dispositif à les mettre à la ligne verticale du fil à plomb.
